# FASCICULE DE BREVET EUROPEEN

(11) **EP 2 339 764 B1**
(45) Date de publication et mention de la délivrance du brevet: **12.09.2012**
(21) Numéro de dépôt: 10196209.0
(22) Date de dépôt: 21.12.2010
(51) Int. Cl.: H04B 17/00

(54) **Procédé et système d'identification automatique non coopérative d'un système d'émission radioélectrique**
Verfahren und Vorrichtung zur automatischen, nicht kooperativen Erkennung einer Funksendevorrichtung
Method and system for automatic non-cooperative identification of an RF transmission system

(30) Priorité: 23.12.2009 FR 0906282
(43) Date de publication de la demande: 29.06.2011
(73) Titulaire: Thales, 92200 Neuilly Sur Seine (FR)
(72) Inventeur: Viravau, Philippe, 92700, Colombes (FR); Gosselin, François, 92700, Colombes (FR)
(74) Mandataire: Dudouit, Isabelle

(56) Documents cités:
- FR-A1- 2 906 657
- NICOLA ALTAN ET AL: "Opportunistic Clock Synchronization in a Beacon Enabled Wireless Sensor Network", 10 septembre 2008 (2008-09-10), AD-HOC, MOBILE AND WIRELESS NETWORKS; [LECTURE NOTES IN COMPUTER SCIENCE], SPRINGER BERLIN HEIDELBERG, BERLIN, HEIDELBERG, PAGE(S) 15 - 28, XP019102619, ISBN: 978-3-540-85208-7 * page 17, ligne 28-37 * * page 25, alinéa 4 - page 26, alinéa 1; tableau 1 *

## Description

L'objet de la présente invention concerne notamment un procédé et un système permettant d'identifier automatiquement tout système d'émission radioélectrique que ce soit un équipement même ou la norme d'émission qui est utilisée dans l'équipement.

Dans la suite de la description, on utilise l'expression algorithme d'identification d'une forme d'onde un algorithme de traitement du signal associé à une forme d'onde donnée ou à un système donné.

L'un des domaines d'application de la présente invention est celui de la surveillance des communications qui se propagent par ondes radioélectriques.

Dans le domaine civil, le contrôle du spectre électromagnétique permet d'assurer une bonne qualité des liaisons de contrôle, en vérifiant entre autre, que des émissions non autorisées ne viennent pas polluer les émissions légales ou autorisées par un opérateur de communications. Il serait par exemple inacceptable que des ondes émises par des particuliers perturbent les communications radio entre un pilote d'avion de ligne et un contrôleur aérien. La surveillance du spectre permet en outre de s'assurer de l'activité radioélectrique réelle et de mettre en place un système de régulation financière, voire d'amendes aux émetteurs qui ne seraient pas acquittés de taxes requises.

Dans d'autres domaines, la surveillance du spectre permet d'accéder à des informations sur des utilisateurs en analysant les ondes électromagnétiques qu'ils émettent. Quel que soit le niveau de précision atteint, l'information peut s'avérer précieuse. Détecter qu'une communication a eu lieu sur une zone géographique donnée, à un instant donné, est ainsi parfois suffisant pour envisager certaines actions, sans qu'il soit nécessaire d'accéder au contenu de l'information échangée. A un niveau d'analyse supérieur, il est possible d'identifier le type de communication effectuée, puis les matériels utilisés pour l'effectuer, et enfin d'accéder au contenu des messages.

Habituellement, le contrôle des communications radio s'effectue à l'aide d'appareils de mesure permettant notamment :
1) de détecter les émissions radioélectriques,
2) d'estimer la Direction d'Arrivée des signaux à l'aide de goniomètres, instruments purement passifs, sans aucune émission donc non détectables. Ils permettent de capter, de détecter et d'analyser les rayonnements électromagnétiques de l'environnement. Il est également possible de localiser les émetteurs de ces signaux en utilisant trois goniomètres et en effectuant une triangulation des directions d'arrivée,
3) de caractériser les émissions en effectuant une analyse du signal intercepté et en mesurant ses paramètres caractéristiques, tels que la fréquence radio, la puissance du signal, par exemple.

L'objet de la présente invention concerne plus particulièrement l'étape d'analyse du signal (étape 3 précédente).

Lorsqu'un signal électromagnétique est détecté, on procède souvent à une analyse détaillée du signal intercepté de façon à le caractériser, puis à l'identifier. Cette analyse vise à apporter à l'utilisateur des informations telles que « il s'agit d'un signal émis par un téléphone mobile GSM » ou bien « il s'agit d'un signal émis par une balise automatique d'aide au guidage d'avions de ligne ».

Cette identification étant réalisée de manière passive, il n'est pas possible d'interroger l'émetteur pour connaître ses caractéristiques d'émission. On utilise donc des techniques passives qui effectuent des mesures à partir du signal intercepté pour en estimer certains paramètres techniques, tels que la fréquence d'émission, le type de modulation utilisée (modulation d'amplitude, de fréquence, de phase), le nombre de symboles transmis par seconde dans le cas de communications numériques, le nombre d'états de la modulation, la constellation pour les modulations linéaires, la valeur des sauts de fréquence pour les modulations à saut de fréquence, la présence éventuelle d'un procédé de codage particulier.

Pour mesurer ces paramètres, il est connu d'utiliser une technique dite de reconnaissance aveugle de modulation qui réalise le calcul d'une liste de critères caractéristiques des modulations, et décide, à partir des valeurs obtenues, quelle est la modulation reconnue.

L'un des inconvénients présentés par les méthodes mises en oeuvre par l'art antérieur est qu'elles nécessitent pour la plupart une analyse détaillée du signal intercepté de façon dans un premier temps à le caractériser, puis dans un deuxième temps à l'identifier.

Par exemple, les systèmes dotés de reconnaissance de modulation permettent d'obtenir, sans connaissance a priori, les paramètres techniques de la forme d'onde utilisée par l'émetteur intercepté.

Si la technique de la reconnaissance de modulation présente un certain nombre d'avantages, elle possède cependant plusieurs inconvénients, à savoir :
a) elle est dans la plupart des cas limitée à la reconnaissance d'un éventail restreint de formes d'ondes. Or de plus en plus de systèmes sont capables d'utiliser plusieurs formes d'onde simultanément. Ils sont également capables d'utiliser des formes d'ondes complexes, comme la combinaison des formes d'ondes élémentaires par sur-modulation et/ou multiplexage fréquentiel. Il peut s'agir, par exemple, d'un système de transmission de voix analogique couplée à un système d'identification connu de l'Homme du métier, comme l'identification des stations de radio (RDS) ;
b) si l'opérateur d'interception ne dispose pas de connaissances suffisantes sur le modèle intercepté, ce dernier ne peut associer les résultats obtenus à un système de transmission connu ;
c) un opérateur d'interception doit disposer de bonnes connaissances en traitement de signal et en techniques de radiocommunication pour interpréter les résultats obtenus.

D'autres techniques existantes s'appuient sur un processus de reconnaissance de modulation basé sur des techniques de type réseau ou de neurones couplées à des techniques d'analyse des moments cycliques du signal.

L'idée mise en oeuvre par le procédé selon l'invention repose sur une nouvelle approche permettant de procéder à l'identification des communications radio en affichant directement à l'utilisateur le type de communication ou de transmission identifié, le signal ou encore la norme d'émission ou de communication utilisée. Pour cela, au lieu de procéder de manière aveugle à une estimation des paramètres techniques du signal, le procédé selon l'invention s'appuie sur le fait que de nombreux signaux émis correspondent souvent à un standard particulier dont on connaît déjà les paramètres techniques. Le procédé va utiliser une base de données contenant des caractéristiques techniques des modèles de transmission candidats, des descriptifs de plusieurs signaux ou formes d'onde connues et répertoriées. Pour chaque modèle ainsi décrit, le procédé va vérifier la compatibilité entre un modèle testé et les données du signal électromagnétique reçu.

L'invention concerne un procédé d'identification d'une forme d'onde dans un système de transmission radioélectrique caractérisé en ce qu'il comporte au moins les étapes suivantes :
■ Acquérir un signal radioélectrique Sr et le transformer sous un format d'échantillons numérisés Dr,
■ Déterminer au moins une caractéristique Fc associée audit signal numérisé,
■ A partir de ladite caractéristique Fc, déterminer le ou les modèles Mi de signaux susceptibles de correspondre au signal Sr,
■ Exécuter une boucle d'identification en exécutant les étapes suivantes :
   ■ Considérer un premier modèle Mi, de signal asssocié à un algorithme Ai de traitement de signal,
   ■ Appliquer ledit algorithme Ai de traitement de signal associé audit modèle Mi sur les données numérisées Dr afin d'obtenir une note Vi de vraisemblance entre le signal et le modèle.
      ■ Si la note de vraisemblance Vi est supérieure à une valeur minimale Vmin, alors le signal correspond, dans certains cas, au modèle Mi,
      ■ Si la note de vraisemblance Vi est inférieure ou égale à ladite valeur minimale Vmin, tester un autre modèle Mi' et exécuter un algorithme Ai' associé au modèle Mi' sur les données numérisées,
      ■ Exécuter cette boucle d'identification d'un modèle et de comparaison sur tous les modèles Mi candidats.
   ■ Si plusieurs modèles Mi ont conduit à des notes de vraisemblance Vi supérieures à la valeur minimale Vmin, déclarer comme modèle Mj accepté celui dont la note de vraisemblance Vj est la plus élevée parmi l'ensemble des notes de vraisemblance Vi supérieures à la valeur minimale Vmin.
   ■ Si aucun modèle testé n'a donné lieu à une note de vraisemblance supérieure à la valeur minimale Vmin, ne pas prendre de décision ou bien poursuivre les analyses du signal reçu Sr afin de créer un nouveau modèle associé audit signal.

L'étape de vérification de la vraisemblance du signal reçu et du modèle associé est, par exemple, exécutée en utilisant les étapes suivantes :
- Démoduler le signal Sr à identifier en prenant pour hypothèse que le signal correspond au modèle testé,
- Vérification de l'erreur quadratique moyenne obtenue,
- Calcul d'une note de qualité proportionnelle à la qualité de démodulation en fonction du modèle recherché,

Les paramètres techniques associés à une forme d'onde ou à un signal peuvent être choisis parmi la liste suivante :
- La gamme de fréquence du mode de transmission,
- La largeur de bande de la forme d'onde utilisée,
- Le type d'activité temporelle de l'émission interceptée,
- Les caractéristiques de forme d'onde (modulation, débit, modulation et nombre d'états de la modulation),
- Les caractéristiques du codage canal et source du mode de transmission.

Le procédé peut comporter une étape préalable de traitement du signal radioélectrique reçu où le signal est transposé en bande de base.

L'invention concerne aussi un système d'identification automatique d'un système ou d'un signal d'émission radioélectrique caractérisé en ce qu'il comporte au moins les éléments suivants : un processeur adapté à exécuter les étapes du procédé décrit précédemment, une première base de données contenant plusieurs modèles Mi de signaux radioélectriques caractérisés par une ou plusieurs de leurs caractéristiques techniques, une deuxième base de données contenant différents algorithmes Aj, un modèle Mi de signal étant associé à un algorithme Ai de traitement de signal, ledit processeur comportant un premier module d'élection d'un ou de plusieurs modèles {Mi} susceptibles de représenter le signal ou la norme d'émission et qui va chercher un algorithme de traitement Ai associé à un modèle Mi, un deuxième module exécutant l'étape d'identification du modèle obtenu M'i après application de l'algorithme de traitement Ai sur les données numérisées Dr.

Le procédé et le système selon l'invention peuvent être utilisés pour la reconnaissance d'un signal GSM.

Le procédé et le système peuvent aussi être utilisés pour la reconnaissance d'un signal de télévision numérique.

D'autres caractéristiques et avantages du procédé et du système selon l'invention apparaîtront mieux à la lecture de la description qui suit d'un exemple de réalisation donné à titre illustratif et nullement limitatif annexé des figures qui représentent :
- La figure 1, un exemple d'architecture schématisée d'un récepteur selon l'invention
- La figure 2, une représentation du déroulement des étapes du procédé selon l'invention,
- La figure 3, un exemple de mise en oeuvre pour un signal GSM, et

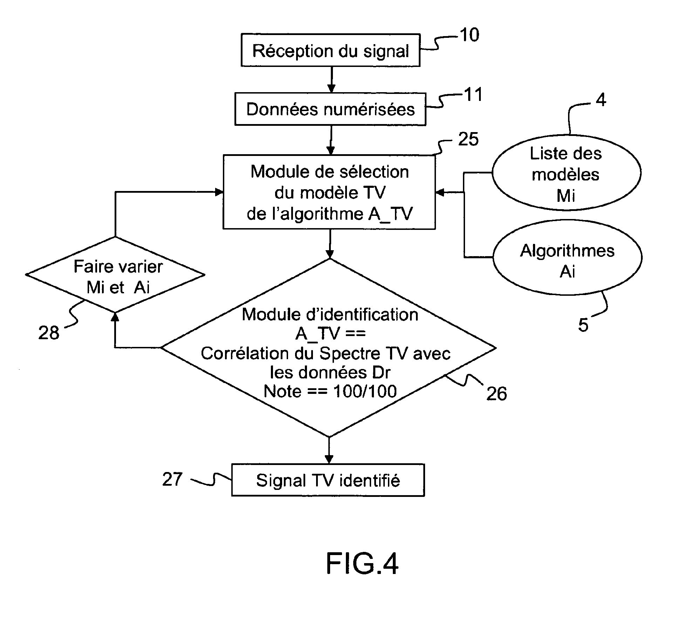

- La figure 4, une représentation de l'application du procédé selon l'invention pour un signal de télévision numérique.

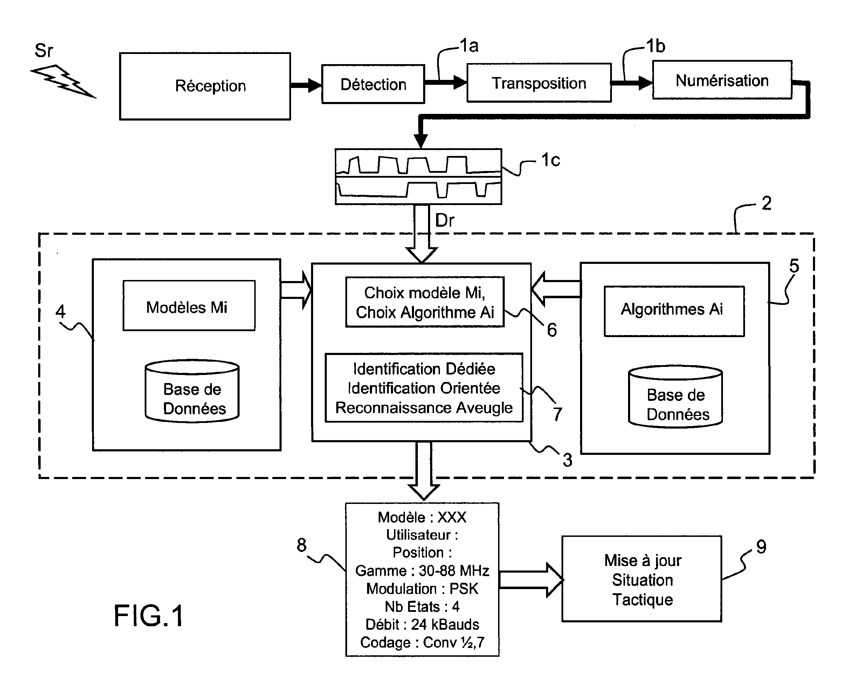

La figure 1 schématise une architecture possible pour le traitement du signal radioélectrique Sr, qui est reçu au niveau d'un récepteur 1, le signal détecté 1 a est, par exemple transposé en bande de base et numérisé 1 b, 1 c. Le signal numérisé Sr composé d'un ensemble de données numériques Dr est transmis à un module de traitement selon l'invention 2 qui comprend un processeur 3 permettant l'exécution des étapes du procédé selon l'invention et qui interagit avec une base de données 4 contenant plusieurs modèles de signaux radioélectriques pouvant être caractérisés par une ou plusieurs de leur caractéristique, par exemple la fréquence représentative de la modulation utilisée pour moduler le signal et une base de données 5 contenant différents algorithmes Aj, un modèle Mi de signal étant associé à un algorithme Ai de traitement de signal. Le processeur 3 va comporter un premier module 6 qui a notamment pour fonction de choisir un ou plusieurs modèles {Mi} susceptibles de représenter le signal ou la norme d'émission et qui va chercher un algorithme de traitement Ai associé à un modèle Mi. Le processeur va exécuter l'algorithme de traitement associé à un modèle Mi sur l'ensemble des données numérisées Dr, selon les étapes du procédé qui vont être explicitées ci-après. Le processeur 3 comprend un deuxième module 7 qui va réaliser l'étape d'identification du modèle obtenu M'i après application de l'algorithme de traitement Ai sur les données numérisées Dr. L'identification consiste notamment à comparer le modèle Mi retenu initialement au modèle M'i obtenu après exécution de l'algorithme Ai sur les données numérisées comme il va être explicité plus loin dans la description. Le résultat trouvé, c'est-à-dire l'identification ou non de la forme d'onde, va être affiché sur un module d'affichage qui peut être un écran de PC 8. Le système selon l'invention peut aussi comporter une interface 9 permettant la mise à jour des bases de données.

La base de données 4 des modèles Mi contient des caractéristiques techniques des modèles de transmission.

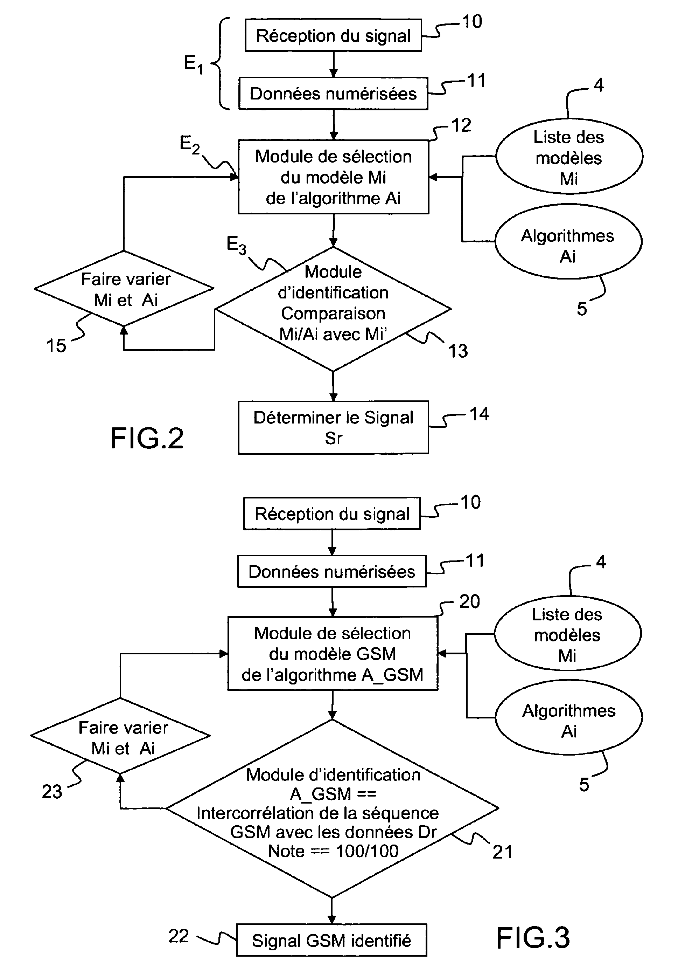

La figure 2 illustre les différentes étapes mises en oeuvre par le procédé selon l'invention.

Le procédé peut comporter les étapes suivantes
La détection du signal radioélectrique par un récepteur approprié. L'étape d'acquisition du signal radioélectrique, 10, 11 peut comporter les étapes suivantes :
- Une transposition du signal en bande de base,
- Une numérisation du signal analogique en signal numérique donnant l'ensemble des données numérisées Dr représentatif du signal reçu,
- Un stockage des échantillons numériques Dr du signal en mémoire (par exemple en utilisant une mémoire vive ou encore un disque dur).

La lecture dans la base de données des informations relatives à chaque mode de transmission (par exemple, le nom du mode, la gamme de fréquence, la largeur de bande, la modulation, le codage...).

Une boucle de contrôle et de comparaison sur chaque modèle de la base de données sélectionné en fonction du signal reçu avec les étapes suivantes :
E1) Lecture du signal numérique, 10, 11
E2) Choix d'un ou de plusieurs modèles Mi pour un paramètre de signal choisi, par exemple la fréquence centrale Fc, 12
E3) Pour un modèle Mi choisi, sélectionner 12, et exécuter un algorithme Ai d'identification associé au modèle Mi sur l'ensemble Dr des données numérisées, on obtient un modèle M'i,
E4) déterminer une note V de vraisemblance entre le signal et le modèle Mi, la note de vraisemblance est, par exemple, obtenue en comparant le modèle M'i obtenu après exécution de l'algorithme Ai retenu et associé au modèle Mi et le modèle Mi initialement retenu dans la boucle de contrôle, l'attribution de la note de vraisemblance s'effectue, par exemple, par rapport à un paramètre technique qui est reconnu et choisi pour le signal Sr étudié, 13
E5).
   ■ Si la note de vraisemblance Vi est supérieure à une valeur minimale Vmin, alors le signal correspond au modèle Mi, on affiche le signal retenu, 14,
   ■ Si la note de vraisemblance Vi est inférieure ou égale à ladite valeur minimale Vmin, élire un autre modèle Mi' et exécuter un algorithme Ai' associé au modèle M'i sur les données numérisées, 15,
Exécuter cette boucle d'identification d'un modèle et de comparaison sur tous les modèles Mi élus et retenir le modèle pour lequel on obtient la meilleure note de vraisemblance.

Dans le cas où le procédé ne trouve pas de modèle associé, alors le procédé peut analyser en dehors de la boucle de contrôle le signal de manière à en étudier ses caractéristiques et à créer un modèle associé au signal, afin de tenir à jour la base de données des modèles.

Un module d'identification 7 peut comporter, par exemple, les fonctionnalités suivantes :
- Vérification de la fréquence radio du signal intercepté après exécution de l'algorithme sur les données numérisées avec la fréquence radio du modèle testé, associé à l'algorithme utilisé sur les données numérisées.
- Estimation de la largeur de bande du signal intercepté (qui peut être réalisée en calculant la largeur du spectre) avec la largeur de bande correspondant à un modèle de signal retenu,
- Vérification de la vraisemblance du signal et du modèle associé. Cette vérification peut être réalisée de la manière suivante :
   - Démodulation du signal en prenant pour hypothèse que le signal correspond au modèle testé,
   - Vérification de l'erreur quadratique moyenne obtenue,
   - Calcul d'une note de qualité proportionnelle à la qualité de démodulation en fonction du modèle recherché
- Prise de décision dans le cas où l'on ne trouve pas de modèle correspondant au signal reçu.

Les paramètres techniques associés à une forme d'onde ou à un signal peuvent être choisis parmi la liste suivante :
- La gamme de fréquence du mode de transmission,
- La largeur de bande de la forme d'onde utilisée,
- Le type d'activité temporelle de l'émission interceptée,
- Les caractéristiques de forme d'onde (modulation, débit, modulation et nombre d'états de la modulation),
- Les caractéristiques du codage canal et source du mode de transmission.

L'exemple qui suit est donné dans le cadre d'un signal GSM. L'identification d'une communication de téléphonie mobile se fait, par exemple, en vérifiant que le signal est intercepté de la façon suivante :

Le signal a été émis à une fréquence radio compatible de celles imposées par la norme GSM, par exemple 920 MHz,

Le procédé va vérifier si la séquence de synchronisation trouvée en exécutant les étapes de l'algorithme de traitement associé, est semblable à la séquence de synchronisation du GSM, ou si le signal correspond à une communication numérique dont le débit symbole est de 270, 833 bauds, étape 21 et faire varier les modèles Ai, Mi, 23 pour décider de l'identification du signal GSM, 22.

Si l'une des caractéristiques ci-dessus n'est pas mise en évidence par application des étapes du procédé selon l'invention, par exemple si la note de vraisemblance entre la séquence de synchronisation trouvée en appliquant l'algorithme de traitement correspondant est inférieure à la valeur seuil, malgré l'application de plusieurs modèles et d'algorithmes correspondants, (20, 21, 22, 23) alors le procédé décide qu'il ne peut pas s'agir d'un signal de type GSM.

L'ensemble des paramètres techniques n'est donc plus estimé de manière aveugle. Les traitements orientés mis en oeuvre sont donc plus simples, plus rapides et plus efficaces qu'avec les techniques classiques.

Une autre variante d'application possible pour la mise en oeuvre de l'invention concerne l'identification d'un signal de télévision analogique.

Un signal de télévision analogique est composé de plusieurs signaux simultanés. Ce signal est composé d'une « porteuse image » véhiculant l'image analogique du signal, une « porteuse son » véhiculant le son associé à l'image, espacée de 6, 5 MHz de la porteuse image.

Un algorithme simple d'identification d'un signal de télévision selon l'invention en mettant en oeuvre le procédé selon l'invention est le suivant : calculer le spectre du signal à partir des échantillons IQ numérisés en utilisant un modèle approprié mémorisé dans la base de données modèle et vérifier la présence de deux maximums dans le spectre, les deux maximums étant espacés de 6, 5 MHz. Les étapes de sélection d'un modèle ou d'un algorithme selon les étapes du procédé selon l'invention (25, 26, 28) ainsi que l'étape d'identification du signal TV numérique 27 s'effectuent conformément aux étapes du procédé donné en relation à la figure 2.

La base de données des modèles peut être enrichie au cours du temps, lorsqu'un nouveau signal est reconnu. Pour cela un opérateur va décharger les différents éléments constituant un nouveau modèle et/ou un algorithme de traitement associé à ce nouveau modèle.

Le procédé et le dispositif selon l'invention sont par exemple utilisés dans des capteurs de contrôle de spectre, pour identifier la forme d'onde intrapulse des radars, ou encore pour l'identification de toutes formes d'onde permettant la transmission d'informations.

Le procédé et le système selon l'invention permettent notamment d'obtenir des performances optimales en termes de détection et d'identification des systèmes. L'invention offre une meilleure ergonomie pour l'utilisateur et une simplification d'utilisation, car l'utilisateur n'a plus à faire lui-même le lien entre des paramètres techniques calculés et le type de transmission associée. L'invention permet notamment :
- de meilleures performances d'identification : un signal n'a pas besoin d'être reçu à une puissance aussi forte qu'avec les techniques classiques pour être identifié, c'est-à-dire que les nouveaux traitements sont plus robustes et plus fiables que les traitements aveugles,
- certains types de transmission impossibles à reconnaître avec les techniques classiques peuvent désormais être identifiés grâce au procédé et au dispositif selon l'invention,
- l'approche est modulaire, la liste des traitements et des modèles à identifier peut être enrichie au cours du temps, contrairement aux techniques classiques, qui sont figées une fois pour toutes ou nécessitent une refonte globale de la stratégie de reconnaissance.

## Revendications

1. Procédé d'identification d'une forme d'onde dans un système de transmission radioélectrique **caractérisé en ce qu'**il comporte au moins les étapes suivantes :
• Acquérir un signal radioélectrique Sr et le transformer sous un format d'échantillons numérisés Dr,
• Déterminer au moins une caractéristique Fc associée audit signal numérisé,
• A partir de ladite caractéristique Fc, déterminer le ou les modèles Mi de signaux susceptibles de correspondre au signal Sr,
• Exécuter une boucle d'identification en exécutant les étapes suivantes :
• Considérer un premier modèle Mi, de signal associé à un algorithme Ai de traitement de signal,
• Appliquer ledit algorithme Ai de traitement de signal associé audit modèle Mi sur les données numérisées Dr afin d'obtenir une note Vi de vraisemblance entre le signal et le modèle.
• Si la note de vraisemblance Vi est supérieure à une valeur minimale Vmin, alors le signal correspond au modèle Mi,
• Si la note de vraisemblance Vi est inférieure ou égale à ladite valeur minimale Vmin, tester un autre modèle Mi' et exécuter un algorithme Ai' associé au modèle Mi' sur les données numérisées,
• Exécuter cette boucle d'identification d'un modèle et de comparaison sur tous les modèles Mi candidats,
• Si plusieurs modèles Mi ont conduit à des notes de vraisemblance Vi supérieures à la valeur minimale Vmin, déclarer comme modèle Mj accepté celui dont la note de vraisemblance Vj est la plus élevée parmi l'ensemble des notes de vraisemblance Vi supérieures à la valeur minimale Vmin.
• Si aucun modèle testé n'a donné lieu à une note de vraisemblance supérieure à la valeur minimale Vmin, ne pas prendre de décision ou bien poursuivre les analyses du signal reçu Sr afin de créer un nouveau modèle associé audit signal.

2. Procédé selon la revendication 1 **caractérisé en ce que** l'étape de vérification de la vraisemblance du signal reçu et du modèle associé est exécutée en utilisant les étapes suivantes :
• Démoduler le signal Sr à identifier en prenant pour hypothèse que le signal correspond au modèle testé,
• Vérification de l'erreur quadratique moyenne obtenue,
• Calcul d'une note de qualité proportionnelle à la qualité de démodulation en fonction du modèle recherché.

3. Procédé selon l'une des revendications 1 ou 2 **caractérisé en ce que** les paramètres techniques associés à une forme d'onde ou à un signal sont choisis parmi la liste suivante :
• La gamme de fréquence du mode de transmission,
• La largeur de bande de la forme d'onde utilisée,
• Le type d'activité temporelle de l'émission interceptée,
• Les caractéristiques de forme d'onde (modulation, débit, modulation et nombre d'états de la modulation),
• Les caractéristiques du codage canal et source du mode de transmission.

4. Procédé selon la revendication 1 **caractérisé en ce qu'**il comporte une étape préalable de traitement du signal radioélectrique reçu où le signal est transposé en bande de base.

5. Système d'identification automatique d'un système ou d'un signal d'émission radioélectrique **caractérisé en ce qu'**il comporte au moins les éléments suivants : un processeur (3) adapté à exécuter les étapes du procédé selon l'une des revendications 1 à 4, une base de données (4) contenant plusieurs modèles Mi de signaux radioélectriques **caractérisés par** une ou plusieurs de leurs caractéristiques techniques, une base de données (5) contenant différents algorithmes Aj, un modèle Mi de signal étant associé à un algorithme Ai de traitement de signal, ledit processeur (3) comportant un premier module (6) d'élection d'un ou de plusieurs modèles {Mi} susceptibles de représenter le signal ou la norme d'émission et qui va chercher un algorithme de traitement Ai associé à un modèle Mi, un deuxième module (7) exécutant l'étape d'identification de Mi après application de l'algorithme de traitement Ai sur les données numérisées Dr.

6. Utilisation du procédé selon l'une des revendications 1 à 4 ou du système selon la revendication 5 à la reconnaissance d'un signal GSM.

7. Utilisation du procédé selon l'une des revendications 1 à 4 ou du système selon la revendication 5 à la reconnaissance d'un signal de télévision numérique.

## Claims

1. A method for identifying a waveform in a radio transmission system, **characterised in that** it comprises at least the following steps:
- acquiring a radio signal Sr and converting it into a digitised sample format Dr;
- determining at least one characteristic Fc associated with said digitised signal;
- determining, on the basis of said characteristic Fc, the one or more models Mi of signals likely to correspond to the signal Sr;
- executing an identification loop by executing the following steps:
- considering a first model Mi, with a signal associated with a signal processing algorithm Ai;
- applying said signal processing algorithm Ai associated with said model Mi on the digitised data Dr so as to obtain a likelihood score Vi between the signal and the model;
- if the likelihood score Vi is greater than a minimum value Vmin then the signal corresponds to the model Mi;
- if the likelihood score Vi is less than or equal to said minimum value Vmin, testing another model Mi' and executing an algorithm Ai' associated with the model Mi' on the digitised data;
- executing said model identification and comparison loop for all of the candidate models Mi;
- if a plurality of models Mi have resulted in likelihood scores Vi that are greater than the minimum value Vmin, declaring as the accepted model Mj the model with the highest likelihood score Vj out of all of the likelihood scores Vi that are greater than the minimum value Vmin;
- if none of the tested models has resulted in a likelihood score that is greater than the minimum value Vmin, not taking a decision or even continuing the analyses of the received signal Sr so as to create a new model associated with said signal.

2. The method according to claim 1, **characterised in that** the step of verifying the likelihood of the received signal and the associated model is executed using the following steps:
- demodulating the signal Sr to be identified by assuming that the signal corresponds to the tested model;
- verifying the mean square error that is obtained;
- calculating a quality score that is proportional to the demodulation quality as a function of the desired model.

3. The method according to claim 1 or 2, **characterised in that** the technical parameters associated with a waveform or with a signal are selected from the following list:
- the frequency range of the transmission mode;
- the bandwidth of the waveform used;
- the type of time activity of the intercepted emission;
- the waveform characteristics (modulation, rate, modulation and number of modulation states);
- the characteristics of the channel coding and the source of the transmission mode.

4. The method according to claim 1, **characterised in that** it comprises a prior step of processing the received radio signal where the signal is transposed into baseband.

5. A system for automatically identifying a system or a radio emission signal, **characterised in that** it comprises at least the following elements: a processor (3) that is designed to execute the steps of the method according to any one of claims 1 to 4, a database (4) containing several models Mi of radio signals, **characterised by** one or more of their technical characteristics, a database (5) containing different algorithms Aj, a signal model Mi being associated with a signal processing algorithm Ai, said processor (3) comprising a first module (6) for selecting one or more models {Mi} likely to represent the signal or the emission standard and which will look for a processing algorithm Ai associated with a model Mi, a second module (7) executing the step of identifying Mi after applying the processing algorithm Ai to the digitised data Dr.

6. The use of the method according to any one of claims 1 to 4 or of the system according to claim 5 to recognise a GSM signal.

7. The use of the method according to any one of claims 1 to 4 or of the system according to claim 5 to recognise a digital television signal.

## Patentansprüche

1. Verfahren zum Identifizieren einer Wellenform in einem Funksendesystem, **dadurch gekennzeichnet, dass** es wenigstens die folgenden Schritte beinhaltet:
- Erfassen eines Funksignals Sr und Umwandeln des Signals in ein digitalisiertes Abtastsignalformat Dr,
- Ermitteln von wenigstens einer mit dem digitalisierten Signal assoziierten Charakteristik Fc,
- Ermitteln, von dieser Charakteristik Fc, das oder die Modell(e) Mi von Signalen, die dem Signal Sr möglicherweise entsprechen,
- Ausführen einer Identifikationsschleife durch Ausführen der folgenden Schritte:
- Betrachten eines ersten Signalmodells Mi, das mit einem Signalverarbeitungsalgorithmus Ai assoziiert ist,
- Anwenden des mit dem Modell Mi assoziierten Signalverarbeitungsalgorithmus Ai auf die digitalisierten Daten Dr, um eine Ähnlichkeitsbewertung Vi zwischen dem Signal und dem Modell zu erhalten;
wenn die Ähnlichkeitsbewertung Vi größer als ein Mindestwert Vmin ist, dann entspricht das Signal dem Modell Mi,
wenn die Ähnlichkeitsbewertung Vi gleich oder kleiner als der Mindestwert Vmin ist, Testen eines anderen Modells Mi' und Ausführen eines mit dem Modell Mi' assoziierten Algorithmus Ai' an den digitalisierten Daten,
- Ausführen dieser Modellindentifikations- und Vergleichsschleife an allen Kandidatenmodellen Mi,
wenn mehrere Modelle Mi zu Ähnlichkeitsbewertungen Vi größer als der Mindestwert Vmin geführt haben, Erklären desjenigen Modells Mj als akzeptiert, dessen Ähnlichkeitsbewertung Vj von allen Ähnlichkeitsbewertungen Vi, die größer als der Mindestwert Vmin sind, der höchste ist;
wenn kein getestetes Modell in einer Ähnlichkeitsbewertung höher als der Mindestwert Vmin resultiert hat, keine Entscheidung fällen oder die Analysen des empfangenen Signals Sr fortsetzen, um ein neues mit dem Signal assoziiertes Modell zu erzeugen.

2. Verfahren nach Anspruch 1, **dadurch gekennzeichnet, dass** der Schritt des Überprüfens der Ähnlichkeit des empfangenen Signals und des assoziierten Modells mittels der folgenden Schritte ausgeführt wird:
- Demodulieren des zu identifizierenden Signals Sr unter der Annahme, dass das Signal dem getesteten Modell entspricht,
- Überprüfen des erhaltenen mittleren quadratischen Fehlers,
- Berechnen einer zur Demodulationsqualität proportionalen Qualitätsbewertung in Abhängigkeit von dem gewünschten Modell.

3. Verfahren nach Anspruch 1 oder 2, **dadurch gekennzeichnet, dass** die mit einer Wellenform oder einem Signal assoziierten technischen Parameter aus der folgenden Liste ausgewählt sind:
- Frequenzbereich des Übertragungsmodus,
- Bandbreite der verwendeten Wellenform,
- zeitlicher Aktivitätstyp der erfassten Sendung,
- Wellenformcharakteristiken (Modulation, Rate, Modulation und Anzahl der Zustände der Modulation),
- Charakteristiken der Kanalcodierung und der Quelle des Übertragungsmodus.

4. Verfahren nach Anspruch 1, **dadurch gekennzeichnet, dass** es einen vorläufigen Schritt des Verarbeitens des empfangenen Funksignals beinhaltet, wobei das Signal in das Basisband transponiert ist.

5. Automatisches Identifikationssystem für ein Funksendesystem oder -signal, **dadurch gekennzeichnet, dass** es wenigstens die folgenden Elemente umfasst: einen Prozessor (3) zum Ausführen der Schritte des Verfahrens nach einem der Ansprüche 1 bis 4, eine Datenbank (4), die mehrere Funksignalmodelle Mi enthält, **gekennzeichnet durch** eine oder mehrere ihrer technischen Charakteristiken, eine Datenbank (5), die verschiedene Algorithmen Aj enthält, wobei ein Signalmodell Mi mit einem Signalverarbeitungsalgorithmus Ai assoziiert ist, wobei der Prozessor (3) ein erstes Modul (6) zum Auswählen von einem oder mehreren Modellen {Mi} umfasst, die das Signal oder den Sendestandard möglicherweise repräsentieren und das einen mit einem Modell Mi assoziierten Verarbeitungsalgorithmus Ai sucht, und wobei ein zweites Modul (7) den Identifikationsschritt von Mi nach Anwendung des Verarbeitungsalgorithmus Ai auf die digitalisierten Daten Dr ausführt.

6. Anwenden des Verfahrens nach einem der Ansprüche 1 bis 4 oder des Systems nach Anspruch 5 zum Erkennen eines GSM-Signals.

7. Anwenden des Verfahrens nach einem der Ansprüche 1 bis 4 oder des Systems nach Anspruch 5 zum Erkennen eines digitalen Fernsehsignals.
